# FASCICULE DE BREVET EUROPEEN

(11) **EP 0 417 371 B1**
(45) Date de publication et mention de la délivrance du brevet: **29.12.1993**
(21) Numéro de dépôt: 89440094.4
(22) Date de dépôt: 12.09.1989
(51) Int. Cl.: A23L 1/337

(54) **Additif alimentaire concentré, à base d'algues marines, et procédé d'obtention d'un tel additif alimentaire**
Konzentrierter Nahrungsmittelzusatz, auf der Grundlage von Meeresalgen und Verfahren zu seiner Gewinnung
Concentrated food additive based on seaweeds, and process to obtain it

(43) Date de publication de la demande: 20.03.1991
(73) Titulaire: Schirmann, Francis, F-67100 Strasbourg (FR)
(72) Inventeur: Schirmann, Francis, F-67100 Strasbourg (FR)
(74) Mandataire: Nuss, Pierre

(56) Documents cités:
- EP-A- 0 102 307
- EP-A- 0 205 174
- CHEMICAL ABSTRACTS, vol. 91, no. 5, Juillet 1979, page 501, résumé no. 37795t, Columbus, Ohio, US; & JP-A-79 35 234 (R. NAKAZAWA) 15-03-1979
- R.J. COURTINE: "Nouveau Larousse Gastronomique", 1967, page 47, Librairie Larousse, Paris, FR
- FSTA, 71-01-T0009, 71004589; & JP-A-11 51 010, 1970 (NITOH KAIMO KOGYO CO., LTD)

## Description

La présente invention concerne le domaine de l'industrie alimentaire, en particulier des additifs alimentaires, et a pour objet un tel additif concentré, à base d'algues marines.

L'invention a également pour objet un procédé d'obtention d'un tel additif à base d'algues marines.

Actuellement, il existe dans l'industrie agroalimentaire un certain nombre d'additifs à mélanger, notamment, à des pâtes afin, en particulier, d'en modifier le goût et/ou d'en améliorer la digestibilité.

Ces additifs connus, qui sont, généralement, à base de levure ou de concentrés sucrés ne permettent, cependant, généralement pas de limiter l'apport calorique des pâtes obtenues, mais, au contraire, augmentent cet apport, de sorte que, notamment, l'obtention de produits diététiques d'un goût agréable est très difficile.

Par ailleurs, on connaît par Chemical Abstracts, vol. 91, n^{o} 5, juillet 1979, page 501, résumé n^{o} 37795t, Columbus, Ohio., par R.J. Courtine "Nouveau Larousse Gastronomique", 1967, page 47, Librairie Larousse, Paris, FR. et par EP-A-0 205 174, l'utilisation d'additifs alimentaires à base d'algues marines, notamment sous forme de concentrés. Cependant, ces concentrés connus sont d'une utilisation relativement délicate, en particulier pour la réalisation de mélanges parfaitement homogènes à très faible concentration d'algues.

La présente invention a pour but de pallier ces inconvénients.

Elle a, en effet, pour objet un additif alimentaire concentré à base d'algues marines, caractérisé en ce qu'il est constitué par un mélange de jus d'algues marines, de sel marin et d'une solution alcoolisée à 90°.

L'invention a également pour objet un procédé d'obtention d'un tel additif alimentaire caractérisé en ce qu'il consiste à faire macérer les algues marines, préalablement séchées, en mélange avec du sel marin et de l'eau pure avec possibilité d'évaporation de l'eau à l'abri de toute introduction d'éléments parasites, à réaliser ensuite, le cas échéant, l'évaporation totale de l'eau par chauffage, à récupérer les algues et le sel subsistant et à les mélanger à une solution alcoolisée, puis à laisser reposer le mélange ainsi réalisé dans un récipient étanche, à l'abri de la lumière, à égoutter ensuite le mélange algues et sel, en récupérant le liquide alcoolisé, à centrifuger le mélange afin d'en récupérer un jus concentré d'algues, à ajouter au jus ainsi obtenu du sel marin, puis à mélanger énergiquement le jus salé obtenu à la solution alcoolisée résultant de l'égouttage du mélange algues-sel et, enfin, à réaliser un traitement final du mélange ainsi obtenu avant son conditionnement.

La macération du mélange d'algues marines, de sel marin et d'eau pure déminéralisée est avantageusement effectuée pendant une période de cinq à six jours dans un récipient recouvert par une matière filtrante sèche et le reste d'eau subsistant éventuellement après cette macération est évaporée totalement par chauffage, de préférence à une température de 40°C. Un tel chauffage peut être réalisé dans un four ou analogue.

Les algues et le sel subsistant dans le récipient après macération et évaporation de l'eau sont mélanges à une solution alcoolisée à 90° dans une proportion de 25% en poids par rapport au poids d'alcool et le mélange obtenu est maintenu dans un récipient étanche, à l'abri de la lumière, pendant environ dix jours.

Le jus, résultant de la centrifugation du mélange algues marines et sel obtenu après égouttage du liquide alcoolisé, est additionné de 10% en poids de sel marin avant mélange énergique avec la solution alcoolisée à 90° d'égouttage, puis le mélange ainsi obtenu est maintenu pendant environ soixante minutes à 30°C avant d'être conditionné.

Les algues marines utilisées sont avantageusement du type fucus vésiculosus ou chêne marin ou varech vésiculeux.

Les proportions du mélange de macération sont avantageusement d'une partie en poids de fucus vésiculosus pour 0,2 parties en poids de sel marin et 0,5 parties en poids d'eau pure.

L'additif alimentaire concentré obtenu par mise en oeuvre du procédé conforme à l'invention, peut être ajouté lors de la préparation de toutes denrées alimentaires, en particulier de pâtes, dans des proportions comprises entre 0,1 % et 20 % en fonction des aliments à obtenir.

Grâce à l'invention, il est possible de réaliser un additif alimentaire concentré à base d'algues marines, plus particulièrement utilisable avec des pâtes, ainsi qu'éventuellement avec des produits laitiers et permettant la réalisation de produits diététiques du fait de son apport calorique nul et de ses vertus diurétiques.

## Revendications

1. Additif alimentaire concentré à base d'algues marines, caractérisé en ce qu'il est constitué par un mélange de jus d'algues marines, de sel marin et d'une solution alcoolisée à 90°.

2. Procédé d'obtention d'un additif alimentaire, suivant la revendication 1, caractérisé en ce qu'il consiste à faire macérer les algues marines, préalablement séchées, en mélange avec du sel marin et de l'eau pure avec possibilité d'évaporation de l'eau à l'abri de toute introduction d'éléments parasites, à réaliser ensuite, le cas échéant, l'évaporation totale de l'eau par chauffage, à récupérer les algues et le sel subsistant et à les mélanger à une solution alcoolisée, puis à laisser reposer le mélange ainsi réalisé dans un récipient étanche, à l'abri de la lumière, à égoutter ensuite le mélange algues et sel, en récupérant le liquide alcoolisé, à centrifuger le mélange afin d'en récupérer un jus concentré d'algues, à ajouter au jus ainsi obtenu du sel marin, puis à mélanger énergiquement le jus salé obtenu à la solution alcoolisée résultant de l'égouttage du mélange algues-sel et, enfin, à réaliser un traitement final du mélange ainsi obtenu avant son conditionnement.

3. Procédé, suivant la revendication 2, caractérisé en ce que la macération du mélange d'algues marines, de sel marin et d'eau pure déminéralisée est effectuée pendant une période de cinq à six jours dans un récipient recouvert par une matière filtrante sèche et le reste d'eau subsistant éventuellement après cette macération est évaporée totalement par chauffage, de préférence à une température de 40°C.

4. Procédé, suivant la revendication 2, caractérisé en ce que les algues et le sel subsistant dans le récipient après macération et évaporation de l'eau sont mélangés à une solution alcoolisée à 90° dans une proportion de 25% en poids par rapport au poids d'alcool et le mélange obtenu est maintenu dans un récipient étanche, à l'abri de la lumière, pendant environ dix jours.

5. Procédé, suivant la revendication 2 caractérisé en ce que le jus, résultant de la centrifugation du mélange algues marines et sel obtenu après égouttage du liquide alcoolisé, est additionné de 10% en poids de sel marin avant mélange énergique avec la solution alcoolisée à 90° d'égouttage, puis le mélange ainsi obtenu est maintenu pendant environ soixante minutes à 30°C avant d'être conditionné.

6. Procédé, suivant l'une quelconque des revendications 2 à 5, caractérisé en ce que les algues marines utilisées sont du type fucus vésiculosus ou chêne marin ou varech vésiculeux.

7. Procédé, suivant l'une quelconque des revendications 2 et 3, caractérisé en ce que les proportions du mélange de macération sont d'une partie en poids de fucus vésiculosus pour 0,2 parties en poids de sel marin et 0,5 parties en poids d'eau pure.

8. Additif susceptible d'être obtenu par application du procédé suivant l'une quelconque des revendications 2 à 7, caractérise en ce qu'il est ajouté, lors de la préparation de denrées alimentaires, dans des proportions comprises entre 0,1 % et 20 %.

## Claims

1. Concentrated food additive based on seaweed, characterised in that it consists of a mixture of liquid seaweed extracts, sea salt and a 90° alcohol solution.

2. Process for the preparation of a food additive according to claim 1, characterised in that it consists in macerating previously dried seaweed mixed with sea salt and pure water, with possibility of evaporating the water with protection from the introduction of any foreign bodies, then if necessary completely evaporating the water by heating, recovering the remaining seaweed and salt and mixing them with an alcohol solution, then leaving the mixture so obtained to stand in a sealed container protected from light, then draining the mixture of seaweed and salt, recovering trip alcoholic liquid, centrifuging the mixture in order to recover from it the concentrated liquid seaweed extract, adding sea salt to the liquid extract so obtained, then vigorously mixing the salted liquid extract obtained with the alcohol solution drained from the seaweed/salt mixture and, lastly, performing a final treatment of the mixture so obtained before it is packaged.

3. Process according to claims 2, characterised in that maceration of the mixture of seaweed, sea salt and pure demineralised water is performed for a period of five to six days in a container covered with a dry filter medium and the residual water possibly remaining after this maceration is completely evaporated by heating, preferably at a temperature of 40°C.

4. Process according to claim 2, characterised in that the seaweed and salt remaining in the container after maceration and evaporation of the water are mixed with a 90° alcohol solution in a proportion of 25 wt.% in relation to the weight of alcohol and the mixture obtained is kept in a sealed container protected from light for approximately 10 days.

5. Process according to claim 2, characterised in that the liquid extract arising from centrifuging the mixture of seaweed and salt obtained after draining the alcoholic liquid has added to it 10 wt.% of sea salt before being vigorously mixed with the drained 90° alcohol solution, then the mixture so obtained is held at 30°C for approximately sixty minutes before being packaged.

6. Process according to any of claims 2 to 5 characterised in that the seaweed used is of the type fucus vésiculosus or chêne marin or varech vésiculeux.

7. Process according to either of claims 2 and 3, characterised in that the proportions for the maceration mixture are one part by weight of fucus vésiculosus to 0.2 parts by weight of sea salt and 0.5 parts by weight of pure water.

8. Additive which may be obtained using the process according to any of claims 2 to 7, characterised in that it is added to foodstuffs during their preparation in proportions of between 0.1% and 20%.

## Patentansprüche

1. Konzentrierter Nahrungsmittelzusatz auf der Basis von Heeresalgen, dadurch gekennzeichnet, daß er aus einem Gemisch von Saft von Meeresalgen, Meersalz und einer 90%-igen Alkohollösung besteht.

2. Verfahren zur Herstellung eines Nahrungsmittelzusatzes gemäß Anspruch 1, gekennzeichnet durch Mazeration der zuvor getrockneten Meeresalgen in Mischung mit Meersalz und reinem Wasser, wobei das Wasser unter Abschluß gegen Zufuhr jeglicher schädlicher Bestandteile verdunsten kann, gegebenenfalls durch anschließende vollständige Verdampfung des Wassers durch Erhitzen, durch Rückgewinnung der Algen und des Meersalzrückstandes und durch Mischung der Algen und des Meersalzrückstandes mit einer Alkohollösung, durch anschließendes Ruhenlassen des so erhaltenen Gemischs unter Lichtabschluß in einem abgedichteten Behälter, durch anschließende Flüssigkeitsabscheidung aus dem Gemisch aus Algen und Meersalz unter Rückgewinnung der alkoholischen Flüssigkeit, durch Zentrifugieren des Gemischs zur Gewinnung eines konzentrierten Safts von Algen, durch Hinzufügen von Meersalz zu dem so erhaltenen Saft, durch anschließendes kräftiges Mischen des so erhaltenen gesalzenen Safts mit der bei der Flüssigkeitsabscheidung aus dem Algen- und Meersalz-Gemisch erhaltenen Alkohollösung und schließlich durch eine abschließende Behandlung des so erhaltenen Gemischs vor seiner Konditionierung.

3. Verfahren nach Anspruch 2, dadurch gekennzeichnet, daß die Mazeration des Gemischs aus Meeresalgen, Meersalz und reinem demineralisiertem Wasser während eines Zeitraums von 5 bis 6 Tagen in einem Behälter durchgeführt wird, der mit einem trockenen Filtermittel abgedeckt ist und daß der nach der Mazeration zurückbleibende Rest an Wasser gegebenenfalls durch Erhitzen vorzugsweise bet einer Temperatur von 40°C vollständig verdampft wird.

4. Verfahren nach Anspruch 2, dadurch gekennzeichnet, daß die nach der Mazeration und der Verdampfung des Wassers in dem Behälter zurückbleibenden Algen und der Salzrückstand mit einer 90%-igen Alkohollösung gemischt werden, wobei das Gewichtsverhältnis der Algen und des Salzes einerseits zu dem Alkohol andererseits 25% beträgt und daß das so erhaltene Gemisch in einem abgedichteten Behälter unter Lichtabschluß ungefähr 10 Tage belassen wird.

5. Verfahren nach Anspruch 2, dadurch gekennzeichnet, daß dem Saft, der sich beim Zentrifugieren des nach der Abscheidung der alkoholischen Flüssigkeit erhaltenen Gemischs aus Meeresalgen und Salz ergibt, 10 Gewichtsprozent Meersalz zugegeben wird, bevor er mit der 90%-igen Alkohollösung der Abscheidung kräftig gemischt wird und daß das so erhaltene Gemisch anschließend etwa 60 Minuten lang bei einer Temperatur von 30°C gehalten wird, ehe es konditioniert wird.

6. Verfahren nach einem der Ansprüche 2 bis 5, dadurch gekennzeichnet, daß es sich bei den Meeresalgen um Meeresalgen des Typs fucus vesiculosus oder chene marin oder varech vesiculeux handelt.

7. Verfahren nach Anspruch 2 oder 3, dadurch gekennzeichnet, daß bei dem Mazerationsgemisch ein Gewichtsanteil fucus vesiculosus auf 0,2 Gewichtsanteile Meersalz und 0,5 Gewichtsanteile reinen Wassers kommt.

8. Zusatz, hergestellt nach einem Verfahren gemäß einem der Ansprüche 2 bis 7, dadurch gekennzeichnet, daß er bei der Herstellung von Nahrungsmitteln mit Anteilen von 0,1 %, bis 20 % beigegeben wird.
